# EUROPÄISCHE PATENTANMELDUNG

(11) **EP 0 823 200 A2**
(43) Veröffentlichungstag der Anmeldung: **11.02.1998**
(21) Anmeldenummer: 97109247.3
(22) Anmeldetag: 07.06.1997
(51) Int. Cl.: A01D 61/00, A01D 75/28

(54) **Landwirtschaftliche Erntemaschine**

(30) Priorität: 25.07.1996 DE 19629957
(71) Anmelder: SAME DEUTZ-FAHR S.P.A., 24047 Treviglio (Bergamo) (IT)
(72) Erfinder: Ahle, Josef, 89420 Höchstädt (DE)
(74) Vertreter: Dreiss, Fuhlendorf, Steimle & Becker

(57) **Zusammenfassung**

Die Erfindung betrifft eine landwirtschaftliche Erntemaschine mit einem Förderkanal und einer beliebigen Gutaufnahmewanne, die mittels einer Drehplatte am Schwenkrahmen des Förderkanals beweglich gelagert ist, wobei im Förderkanal eine umlaufende Fördereinrichtung angeordnet ist, die mit dem Förderkanalboden einen Förderspalt bildet und deren der Gutaufnahmewanne zugewandtes Ende höhenbeweglich ausgebildet ist.

Bei Überschreiten eines bestimmten Schwenkwinkels der Gutaufnahmewanne (2) tritt eine mechanische Berührung zwischen Förderketten (6) und Drehplatte (4) ein, die Zerstörungen verursachen kann. Diese werden dadurch vermieden, daß die Höhenbewegung des der Gutaufnahmewanne (2) zugewandten Endes der Fördereinrichtung in Abhängigkeit von der Bewegung der Gutaufnahmewanne (2) relativ zum Förderkanal (1) erfolgt.

## Beschreibung

Die Erfindung betrifft eine landwirtschaftliche Erntemaschine mit einem Förderkanal und einer beliebigen Gutaufnahmewanne, insbesondere nach dem Oberbegriff des Patentanspruchs 1.

Bekannte, gattungsgemäße landwirtschaftliche Erntemaschinen weisen einen Förderkanal auf, dem eine beliebige Gutaufnahmewanne vorgeschaltet und beliebige Verarbeitungseinrichtungen nachgeschaltet sein können. Die Gutaufnahmewanne ist am Schwenkrahmen des Förderkanals mittels einer Platte beweglich gelagert. Im Förderkanal befindet sich ein Kettenschrägförderer, der mit dem Förderkanalboden einen Förderspalt bildet und dessen der Gutaufnahmewanne zugewandtes Ende höhenbeweglich ausgebildet ist.

Der Transport des Ernteguts erfolgt im Förderspalt zwischen Förderkanalboden und Untertrum der Förderketten, wobei Förderleisten der Förderketten das Erntegut form- und reibschlüssig zu den nachgeschalteten Verarbeitungseinrichtungen fördern.

Um einen störungsfreien Transport des Ernteguts zu erreichen, muß die wannennahe Förderkettenwelle möglichst nahe an einer Einzugsschnecke in der Gutaufnahmewanne angeordnet werden, so daß die Förderleisten der Förderketten die Einzugsschnecke gerade nicht berühren.

Diese Anordnung funktioniert, wenn der Schwenkwinkel der Gutaufnahmewanne gegenüber dem Förderkanal beim Ausgleich von Bodenunebenheiten relativ klein bleibt. Bei landwirtschaftlichen Erntemaschinen mit Seitenneigungsausgleich können größere Schwenkwinkel auftreten, die zu einer Kollision von Förderketten bzw. Förderleisten mit der Platte führen und Schäden verursachen.

Der Erfindung liegt deshalb die Aufgabe zugrunde, eine landwirtschaftliche Erntemaschine mit einer Fördereinrichtung zu schaffen, deren Freigang auch bei großen Schwenkwinkeln der Gutaufnahmewanne gegenüber dem Förderkanal gewährleistet ist.

Die Aufgabe wird dadurch gelöst, daß die Höhenbewegung des der Gutaufnahmewanne zugewandten Endes der Fördereinrichtung in Abhängigkeit von der Bewegung der Gutaufnahmewanne relativ zum Förderkanal erfolgt. Auf diese Weise ist bei allen Schwenkwinkeln ein Sicherheitsabstand zwischen Platte bzw. Gutaufnahmewanne und Förderketten gewährleistet, wodurch eine Kollision und damit eine Beschädigung dieser Teile verhindert wird.

Eine Weiterentwicklung der Erfindung besteht darin, daß die Höhen-bewegung des der Gutaufnahmewanne zugewandten Endes der Fördereinrichtung durch Mitnahme eines Bauteils derselben mittels Druckkontakt zwischen diesem und der Platte oder der Gutaufnahmewanne bzw. einem Anschlag an diesen erfolgt. Durch den direkten, mechanischen Kontakt zwischen der Platte und der Fördereinrichtung wird eine einfache und damit kostengünstige und zuverlässige Lösung der Aufgabe verwirklicht.

Eine vorteilhafte Ausbildung der Erfindung besteht darin, daß die Fördereinrichtung ein Kettenschrägförderer ist, dessen wannennahe Kettenräderwelle in schwenkbaren Lagerarmen gelagert ist, deren über die Kettenräderwelle hinausragende Verlängerungen als Mitnahmebauteile mit Vorsprüngen ausgebildet sind, wobei beim Schwenken der Platte jeweils eine der Vorsprünge in Druckkontakt mit einem der Anschläge steht. Da die Höhenbewegung der Gutaufnahmewanne durch Schwenken derselben mittels Platte verwirklicht wird, kommt jeweils nur ein Mitnahmebauteil und ein Anschlag zur Wirkung. Da die Mitnahmebauteile und die Anschläge modifizierte Serienbauteile sind, ist die erfindungsgemäße Lösung kostengünstig.

Durch die Tatsache, daß die Vorsprünge in Normallage der Gutaufnahmewanne mit Abstand zu den Anschlägen angeordnet sind, wird erreicht, daß die Mitnahme der wannennahen Förderkettenwelle erst ab einem gewissen Schwenkwinkel der Gutaufnahmewanne erfolgt. Dadurch bleibt der Förderspalt in weiten Schwenkbereichen in seiner für die Erntegutförderung optimalen Abmessung.

Erfindunggemäß ist es von Vorteil, daß die Lager der wannennahen Förderkettenwelle als Schwenklager ausgebildet sind. Dadurch ist auch ein einseitiges Anheben der Förderketten bei entsprechenden Schwenkwinkeln der Gutaufnahmewanne möglich.

In Weiterbildung der Erfindung sind die Lagerarme, die in Seitenwänden des Förderkanals gelagert und innerhalb oder außerhalb desselben angeordnet sind, durch Verbindungselemente halbstarr bis starr miteinander verbunden. Diese Lösung ist kostengünstig und ermöglicht einen ungestörten Fluß des Ernteguts im Förderkanal. Außerdem wird beim Anheben eines Lagerarms der andere mehr oder weniger mit angehoben. Dadurch wird eine zu starke Verwindung der Förderketten vermieden.

Weitere Merkmale der Erfindung ergeben sich aus der folgenden Beschreibung und der Zeichnung, in der ein Ausführungsbeispiel der Erfindung schematisch dargestellt ist.

Es zeigen:
- Figur 1:: Kettenschrägförderer mit Gutaufnahmewanne in Normalstellung,
- Figur 2:: Kettenschrägförderer mit Gutaufnahmewanne in Schwenkstellung.

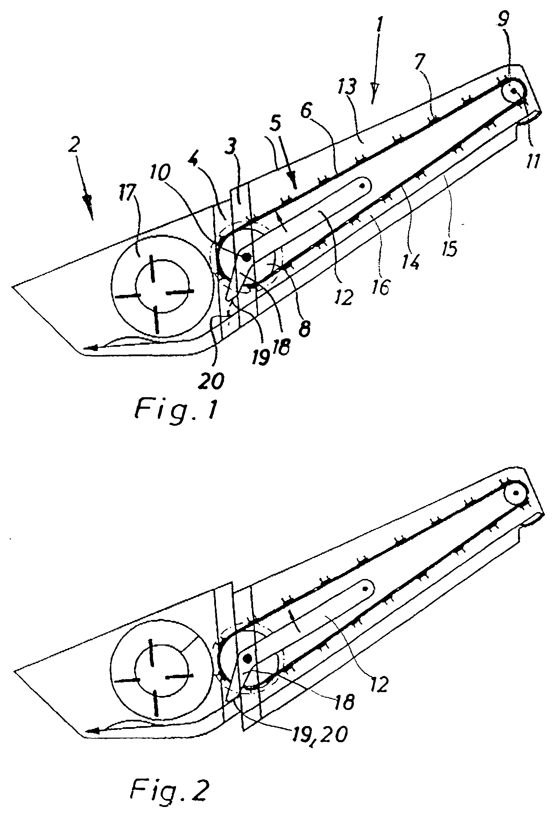

Figur 1 zeigt einen Förderkanal 1, an dem eine Gutaufnahmewanne 2 schwenkbar befestigt ist. Dies geschieht mittels eines am Förderkanal 1 befestigten Schwenkrahmens 3 und einer an der Gutaufnahmewanne 2 befestigten Platte 4, die im Schwenkrahmen 3 schwenkbar gelagert ist.

Im Förderkanal 1 befindet sich ein Kettenschrägförderer 5 mit Förderketten 6, an denen Förderleisten 7 befestigt sind. Die Förderketten werden durch wannennahe Kettenräder 8 und durch hintere Kettenräder 9 geführt. Die wannennahen Kettenräder 8 sind mit einer wannennahen Förderkettenwelle 10, die hinteren Kettenräder 9 mit einer hinteren Förderkettenwelle 11 verbunden.

Die wannennahe Förderkettenwelle 10 ist mittels zweier Schwenklager in zwei Lagerarmen 12 gelagert. Die Lagerarme 12 sind an Seitenwänden 13 des Förderkanals drehbar gelagert. Die hintere Förderkettenwelle 9 ist ebenfalls in den Seitenwänden 13 gelagert. Zwischen den Untertrumen 14 der Förderketten 6 und dem Förderkanalboden 15 befindet sich der Förderspalt 16.

Die Gutaufnahmewanne 2 trägt unter anderem die Einzugsschnecke 17, an deren Umfang die Förderketten 6 heranreichen.

Die Lagerarme 12 weisen eine nach unten abgewinkelte Verlängerung 18 mit einem Vorsprung 19 auf, dessen Gegenflächen die Anschläge 20 der Platte 4 sind. In Normallage der Gutaufnahmewanne 2 besteht ein Abstand zwischen den Vorsprüngen 19 und den Anschlägen 20. Dadurch erfolgt die Mitnahme des verlängerten Lagerarms 12 erst ab einem bestimmten Schwenkwinkel der Gutaufnahmewanne 2. Auf diese Weise bleibt der Förderspalt 16 längstmöglich in seiner für die Erntegutförderung optimalen Ausbildung.

Die Figur 2 zeigt den Förderkanal 1 mit der Gutaufnahmewanne 2 in geschwenkter Position. Dabei ist der Lagerarm 12 und mit ihm eine Seite der wannennahen Förderkettenwelle 10 mittels des Anschlags 20 über den Vorsprung 19 der Verlängerung 18 angehoben. Diese erfindungsgemäße Anordnung verhindert mit einfachen Mitteln, daß die Förderketten 6 mit dem Anschlag 20 und der Platte 4 bei starkem Schwenken derselben in Kollision geraten und zerstört werden.

## Patentansprüche

1. Landwirtschaftliche Erntemaschine, mit einem Förderkanal und einer beliebigen Gutaufnahmewanne, die mittels einer Platte am Schwenkrahmen des Förderkanals beweglich gelagert ist, wobei im Förderkanal eine umlaufende Fördereinrichtung angeordnet ist, die mit dem Förderkanalboden einen Förderspalt bildet und deren der Gutaufnahmewanne zugewandtes Ende höhenbeweglich ausgebildet ist,
**dadurch gekennzeichnet**, daß die Höhenbewegung des der Gutaufnahmewanne (2) zugewandten Endes der Fördereinrichtung in Abhängigkeit von der Bewegung der Gutaufnahmewanne (2) relativ zum Förderkanal (1) erfolgt.

2. Landwirtschaftliche Erntemaschine nach Anspruch 1,
**dadurch gekennzeichnet**, daß die Höhenbewegung des der Gutaufnahmewanne (2) zugewandten Endes der Fördereinrichtung durch Mitnahme eines Bauteils derselben mittels Druckkontakt zwischen diesem und der Gutaufnahmewanne (2) oder der Platte (4) bzw. einem Anschlag (20) an diesen erfolgt.

3. Landwirtschaftliche Erntemaschine nach einem der vorangegangenen Ansprüche,
**dadurch gekennzeichnet**, daß die Fördereinrichtung ein Kettenschrägförderer (5) ist, dessen wannennahe Förderkettenwelle (10) in schwenkbaren Lagerarmen (12) gelagert ist, deren über die Förderkettenwelle (10) hinausragende Verlängerungen (18) als Mitnahmebauteile mit Vorsprüngen (19) ausgebildet sind, wobei beim Schwenken der Gutaufnahmewanne (2) oder der Platte (4) jeweils einer der Vorsprünge (19) in Druckkontakt mit der Gutaufnahmewanne (2) oder der Platte (4) bzw. einem der Anschläge (20 ) an diesen tritt.

4. Landwirtschaftliche Erntemaschine nach einem der vorangegangenen Ansprüche,
**dadurch gekennzeichnet**, daß die Vorsprünge (19) in Normallage der Gutaufnahmewanne (2) mit Abstand zu den Anschlägen (20) angeordnet sind.

5. Landwirtschaftliche Erntemaschine nach einem der vorangegangenen Ansprüche,
**dadurch gekennzeichnet**, daß die Lager der wannennahen Förderkettenwelle (10) als Schwenklager ausgebildet sind.

6. Landwirtschaftliche Erntemaschine nach einem der vorangegangenen Ansprüche,
**dadurch gekennzeichnet**, daß die Lagerarme (12) durch Verbindungselemente halbstarr bis starr miteinander verbunden sind.
